# EUROPEAN PATENT APPLICATION

(11) **EP 4 527 569 A1**
(43) Date of publication of application: **26.03.2025**
(21) Application number: 23937733.6
(22) Date of filing: 07.12.2023
(51) Int. Cl.: B25J 15/06, B65G 47/91

(54) **AIR DIRECTION CHANGING DEVICE**

(30) Priority: 02.08.2023 KR 20230100787
(71) Applicant: Aetech Corporation, Incheon 22689 (KR)
(72) Inventor: PARK, Tae Hyung, Seoul 06236 (KR)
(74) Representative: Jung, Minkyu
(86) International application number: PCT/KR2023/020083
(87) International publication number: WO 2025/028735

(57) **Abstract**

An apparatus for air redirection according to an embodiment of the present invention is installed to be connected to a gripper of a robot arm gripping and moving waste moving on a conveyor belt using air intake force and an intake and exhaust nozzle, and includes: a driving control unit controlling a gripping operation of the gripper using the air intake force or air exhaust force by driving so that the direction of air is able to be changed to intake or exhaust; an intake and exhaust pipe unit disposed to be connected between the driving control unit and the intake and exhaust nozzle; and a branch control unit disposed to be connected between each of pipes of the intake and exhaust pipe unit to supply or block air according to opening and closing control of each of the pipes.

## Description

### Technical Field

The embodiments of the present invention relate to an apparatus for air redirection, and more specifically, to an apparatus for air redirection of a robot arm using air intake force to grip and move waste moving on a conveyor belt and uses air exhaust force to release the gripped waste.

### Background Art

According to the Wastes Management Act, general waste other than industrial waste (specific waste), excluding excrement, is considered garbage. Herein, industrial waste refers to waste generated as a result of industrial activities, and the general waste refers to garbage, excrement, etc. generated as a result of the daily lives of people (radioactive waste is separately stipulated in the Atomic Energy Act).

Garbage may be classified into several categories based on the size, shape, and nature thereof. There is garbage of large size that is discharged of irregularly, such as discarded home appliances like refrigerators, televisions, and washing machines, discarded furniture like desks and chests of drawers, and discarded cars and bicycles, while there is also garbage that is discharged of regularly, such as discarded paper and food leftovers. Garbage may also be classified into non-combustible garbage and combustible garbage, and may also be divided into garbage that produces harmful gases when incinerated or hazardous garbage that pollutes the soil or water. It is recommended that combustible garbage be incinerated, non-combustible garbage and garbage that produces harmful gases be landfilled, and hazardous garbage containing heavy metals, such as mercury batteries or fluorescent lamps, be recycled or safely landfilled.

Generally, garbage produces a bad smell and is a breeding ground for rats, flies, etc., which worsens the living environment and is also harmful to public health. In addition, garbage causes inconvenience to people by taking up valuable living space, spoils the appearance of environments, and causes a disagreeable sensation. Garbage damages the environment, and thus needs to be discharged of through a series of processes, including collection in a container, transportation, intermediate treatment, and final treatment.

The amount of waste plastic generated in Korea is increasing steadily. Since the "Extended Producer Responsibility (EPR)" was expanded and implemented in 2003, the issue of recycling waste plastics, which has been increasing, has become an urgent issue. In order to recycle waste plastics, the most important thing is to separate and sort only the necessary waste plastics from mixed garbage. As the scope of recycling expanded to include plastic packaging materials and films, the sorting of these items is emerging as a major issue.

### Technical Problem

An embodiment of the present invention provides an apparatus for air redirection capable of efficiently changing the direction of air for controlling air intake force and air exhaust force in a robot arm gripping and moving waste moving on a conveyor belt using the air intake force and releases the gripped waste using the air exhaust force.

The aspects of the present invention are not limited to those mentioned above, and other aspects not mentioned herein will be clearly understood by those skilled in the art from the following description.

### Technical Solution

An apparatus for air redirection according to an embodiment of the present invention is installed to be connected to a gripper of a robot arm gripping and moving waste moving on a conveyor belt using air intake force and an intake and exhaust nozzle, and includes: a driving control unit controlling a gripping operation of the gripper using air intake force or air exhaust force by driving so that the direction of air is able to be changed to intake or exhaust; an intake and exhaust pipe unit disposed to be connected between the driving control unit and the intake and exhaust nozzle; and a branch control unit disposed to be connected between each of pipes of the intake and exhaust pipe unit to supply or block air according to opening and closing control of each of the pipes.

The driving control unit may control the gripper to grip and move the waste through the air intake force or to release the waste through the air exhaust force.

The driving control unit may be driven by either a blower method or an air compression method. When driven by the blower method, it may be configured as a ring blower, and when driven by the air compression method, it may be configured as an air compressor.

The intake and exhaust pipe unit may include an intake-only pipe that serves as a passage through which air intaken in through an intake port of the gripper flows in through the intake and exhaust nozzle and then is discharged through an exhaust port provided in the driving control unit; an exhaust-only pipe that serves as a passage through which air intaken in through the exhaust port flows in and then is discharged through the intake port of the gripper via the intake and exhaust nozzle; and a common intake and exhaust pipe that serves as a passage through which air intaken in or exhausted flows according to valve opening and closing control of the branch control unit.

The branch control unit may include: a first valve having one side connected to the common intake and exhaust pipe and the other side connected to the intake-only pipe; a second valve having one side connected to the intake-only pipe and the other side connected to an air filter; a third valve having one side connected to the exhaust-only pipe and the other side connected to the air filter; and a fourth valve having one side connected to the common intake and exhaust pipe and the other side connected to the exhaust-only pipe.

The branch control unit may control directions of all valves provided inside the first to fourth valves horizontally when the direction of air is changed to be intaken by the driving control unit, and may control the direction of all valves provided inside the first to fourth valves vertically when the direction of air is changed to exhaust by the driving control unit.

Specific details of other embodiments are included in the detailed description and the attached drawings.

### Advantageous Effects

According to one embodiment of the present invention, the present invention enables efficient changing of the direction of air for controlling air intake force and air exhaust force in a robot arm gripping and moving waste moving on a conveyor belt using the air intake force and releases the gripped waste using the air exhaust force.

### BRIEF DESCRIPTION OF THE DRAWINGS

FIG. 1 is a block diagram illustrating an apparatus for air redirection according to an embodiment of the present invention.
FIGS. 2 and 3 are usage state diagrams of an apparatus for air redirection according to an embodiment of the present invention.

### DETAILED DESCRIPTION

With respect to the embodiments of the present invention described herein, specific structural and functional descriptions are merely exemplified for the purpose of explaining the embodiments of the present invention, and the embodiments of the present invention may be implemented in various forms and should not be construed as being limited to the embodiments described herein.

The present invention may be variously modified and have various types, and specific embodiments thereof will be illustrated in the drawings and described in detail in the detailed description. However, this is not intended to limit the present invention to specific embodiments, and it should be understood that all modifications, equivalents and substitutes included in the spirit and technical scope of the present invention are included.

Terms such as "first" and "second" may be used to describe various components, but the components are not restricted by the terms. The terms are used only to distinguish one component from another component. For example, a first component may be named a second component without departing from the scope of right of the present invention. Likewise, a second component may be named a first component.

It will be understood that when a component is referred to as being "connected" or "coupled" to another component, the two components may be directly connected or coupled to each other, or intervening components may be present between the two components. It will be understood that when a component is referred to as being "directly connected or coupled", no intervening components are present between the two components. Other expressions describing relationships between components such as "between", "immediately between" or "adjacent to" and "directly adjacent to" may be construed similarly.

The terms used in the present specification are merely used to describe specific embodiments and are not intended to limit the present invention. A singular expression includes a plural expression, unless the context clearly states otherwise. In the present specification, it should be understood that the terms such as "include" or "have" are merely intended to indicate that features, numbers, steps, operations, components, parts, or combinations thereof are present, and are not intended to exclude the possibility that one or more other features, numbers, steps, operations, components, parts, or combinations thereof will be present or added.

Unless otherwise defined, all terms including technical and scientific terms used herein have the same meaning as commonly understood by those skilled in the technical field to which the present invention pertains. It will be understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, preferred embodiments of the present invention will be described in detail with reference to the accompanying drawings. In describing the present invention, in order to facilitate the overall understanding, the same reference numerals are used to designate the same components throughout the drawings, and repeated descriptions of the same components will be omitted.

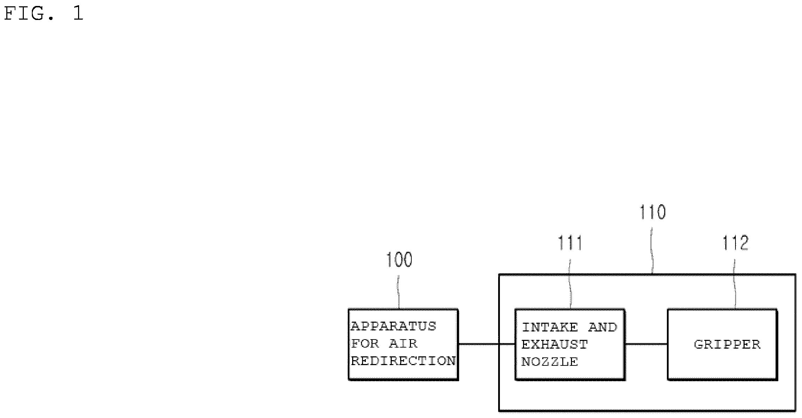

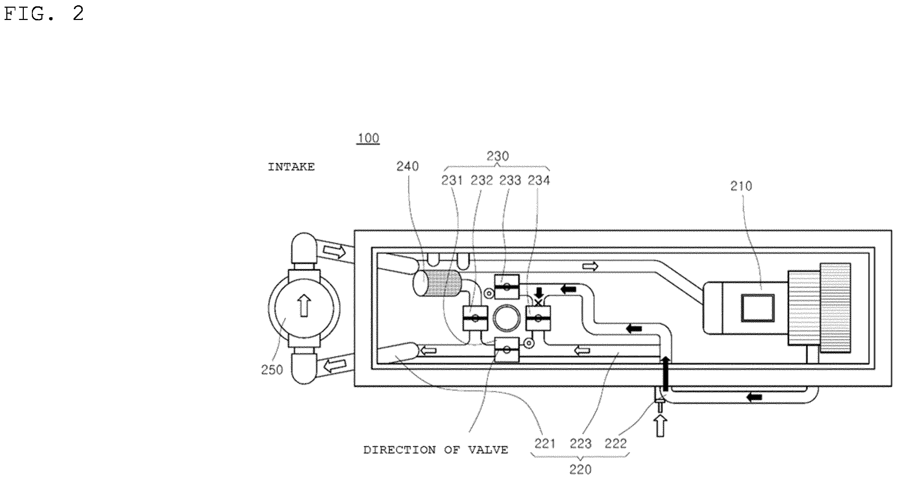

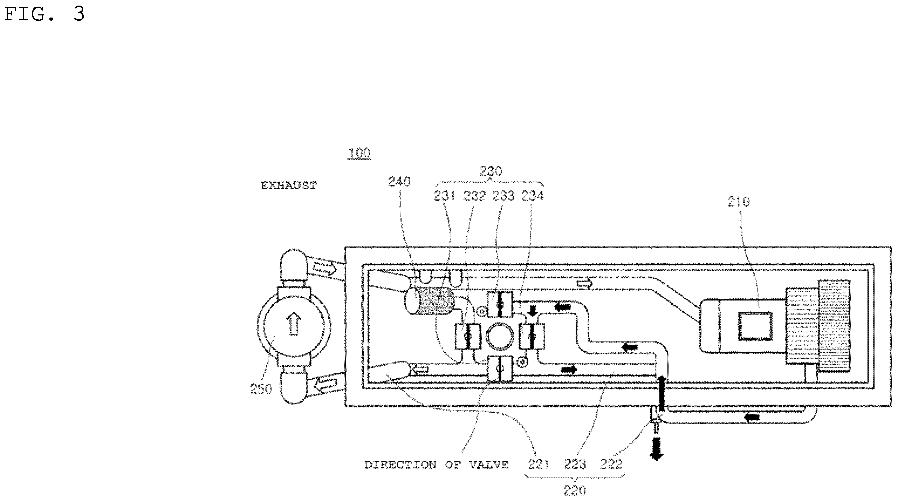

FIG. 1 is a block diagram illustrating an apparatus for air redirection according to an embodiment of the present invention. FIGS. 2 and 3 are usage state diagrams of an apparatus for air redirection according to an embodiment of the present invention.

Referring to FIGS. 1 to 3, an apparatus 100 for air redirection according to an embodiment of the present invention may be installed to be connected through a robot arm 110, a gripper 112, and an intake and exhaust nozzle 111.

The robot arm 110 may grip and move waste (waste plastic, cans, etc.) moving on a conveyor belt (not shown). The robot arm 110 may catch waste by using air intake force and may use air exhaust force when releasing the waste.

To this end, the apparatus 100 for air redirection may be configured to include a driving control unit 210, an intake and exhaust pipe unit 220, and a branch control unit 230.

The driving control unit 210 may control the gripping operation of the gripper 112 through air intake force or air exhaust force by driving to change the direction of air to intake or exhaust.

The driving control unit 210 may control the gripper 112 to grip and move the waste through air intake force or to release the waste through air exhaust force.

The driving control unit 210 may be driven by a pneumatic generation device.

For example, the driving control unit 210 may be driven by either a blower method or an air compression method.

When driven in the blower manner, the driving control unit 210 may be configured as a ring blower. The ring blower is a mechanical device widely used in industrial sites and machines requiring pressurized air, and is a fluid machine that may produce a large head with a small flow rate.

Meanwhile, when driven by the air compression method, the driving control unit 210 may be configured as an air compressor. The air compressor is a pneumatic device that converts electric power (such as an electric motor, or a diesel or gasoline engine) into potential energy stored in compressed air.

For reference, in an embodiment of the present invention, the driving control unit 210 may be implemented as a blow-type ring blower. However, it is not limited thereto and the driving control unit 210 may be implemented with an air compression-type air compressor.

Although the above description has described the blower method or air compression method as the pneumatic generation device, this is merely an example among several embodiments of the present invention. In other embodiments of the present invention, a flammable gas compressor, a piston type air brush, a gasoline compressor, etc. may be applied.

The intake and exhaust pipe unit 220 may be disposed to be connected between the driving control unit 210 and the intake and exhaust nozzle 111. The intake and exhaust pipe unit 220 may be configured to include an intake-only pipe 221, an exhaust-only pipe 222, and a common intake and exhaust pipe 223.

That is, the intake and exhaust pipe unit 220 may be disposed so that one side of the intake-only pipe 221 is connected to the driving control unit 210, and the other side of the intake-only pipe 221 is connected to the common intake and exhaust pipe 223, more specifically, to a first valve 231 and a second valve 232 described below.

In addition, the intake and exhaust pipe unit 220 may be disposed so that one side of the exhaust-only pipe 222 is connected to the driving control unit 210, and the other side of the exhaust-only pipe 222 is connected to the common intake and exhaust pipe 223, more specifically, to a third valve 233 and a fourth valve 234 described below.

In addition, the intake and exhaust pipe unit 220 may be disposed so that one side of the common intake and exhaust pipe 223 is connected to the intake and exhaust nozzle 111, and the other side of the common intake and exhaust pipe 223 is connected to the intake-only pipe 221 and the exhaust-only pipe 222 through the first to fourth valves 231, 232, 233, 234.

The intake and exhaust pipe unit 220 disposed as described above may perform the function of intake air through the intake-only pipe 221.

That is, the aforementioned intake-only pipe 221 may serve as a passage through which air intaken in through an intake port of the gripper 112 flows in through the intake and exhaust nozzle 111 and then is discharged through an exhaust port provided in the driving control unit 210.

In addition, the intake and exhaust pipe unit 220 disposed as described above may perform the function of discharging air through the exhaust-only pipe 222.

That is, the exhaust-only pipe 222 may serve as a passage through which air intaken in through the exhaust port provided in the driving control unit 210 flows in and then is discharged through the intake port of the gripper 112 via the intake and exhaust nozzle 111.

In addition, the intake and exhaust pipe unit 220 disposed as described above may perform the function of selectively intake or exhaust air through the common intake and exhaust pipe 223.

That is, the common intake and exhaust pipe 223 may serve as a passage through which intake or exhaust air flows according to the valve opening and closing control of the branch control unit 230.

The branch control unit 230 is disposed to be connected between each pipe 221, 222, 223 of the intake and exhaust pipe unit 220, and may perform the function of supplying or blocking air according to the opening and closing control of each pipe 221, 222, 223.

To this end, the branch control unit 230 may be configured to include the first valve 231, the second valve 232, the third valve 233, and the fourth valve 234.

The first valve 231 may be disposed so that one side is connected to the common intake and exhaust pipe 223 and the other side is connected to the intake-only pipe 221.

The second valve 232 may be disposed so that one side is connected to the intake-only pipe 221 and the other side is connected to an air filter 240.

The third valve 233 may be disposed so that one side is connected to the exhaust-only pipe 222 and the other side is connected to the air filter 240.

The fourth valve 234 may be disposed so that one side is connected to the common intake and exhaust pipe 223 and the other side is connected to the exhaust-only pipe 222.

The branch control unit 230 disposed as described above may horizontally control the direction of all valves provided inside the first to fourth valves 231, 232, 233, 234 when the direction of air is changed to be intaken by the driving control unit 210.

On the other hand, when the direction of air is changed to exhaust by the driving control unit 210, the branch control unit 230 may vertically control the direction of all the valves provided inside the first to fourth valves 231, 232, 233, 234.

The apparatus 100 for air redirection according to an embodiment of the present invention may be configured to additionally include a ring blower intake air filter 250 in the middle of the intake-only pipe 221 of the intake and exhaust pipe unit 220. The ring blower intake air filter 250 is a filter device for filtering out foreign substances, etc. in the air intaken in by a blower.

Hereinafter, the operation process according to intake and exhaust of the apparatus for air redirection according to an embodiment of the present invention will be described with reference to FIGS. 2 and 3.

The operation process according to intake is explained with reference to FIG. 2 as follows.

First, when an intake command is transmitted to the ring blower and the branch control unit 230, which is an example of the driving control unit 210, the ring blower rotates an impeller located inside casing at high speed to intake external air.

Simultaneously, the first to fourth valves 231, 232, 233, 234 of the branch control unit 230 may all change the direction of the valves to the horizontal direction through valve control.

Accordingly, air intaken in from the outside, that is, air intaken in through the gripper 112 and the intake and exhaust nozzle 111, flows in through the intake and exhaust pipe 220 as a passage. In this process, air intake force is generated, so that waste moving on a conveyor belt may be gripped and moved through the gripper 112.

Meanwhile, referring to Fig. 3, the operation process according to exhaust is explained as follows.

First, when an exhaust command is transmitted to the ring blower and the branch control unit 230, which is an example of the driving control unit 210, the ring blower generates friction of the fluid as the impeller grooves dug radially along the circumference of the impeller located inside the casing rotate inside the casing, and the resulting pressure change increases the head to discharge (exhaust) air to the outside.

Simultaneously, the first to fourth valves 231, 232, 233, 234 of the branch control unit 230 may all change the direction of the valves to the vertical direction through valve control.

Accordingly, the air discharged from the ring blower is discharged through the intake and exhaust nozzle 111 and the gripper 112 through the intake and exhaust pipe 220 as a passage. In this process, air exhaust force is generated to release the operation of the gripper 112, so that the waste gripped by the gripper 112 may be placed at a target point.

Although the embodiments have been described based on the limited embodiments and drawings as described above, those skilled in the pertinent technical field may apply various technical modifications and variations from the foregoing descriptions. For example, even when the described technologies are performed in a different order from that in the described method, and/or the described components such as a system, structure, device, and circuit are coupled or combined in a manner different from that as described above, or are replaced or substituted with other components or equivalents, appropriate results may be achieved.

Therefore, other implementations, other embodiments, and equivalents to claims also fall within the scope of the following claims.

### Description of Reference Numerals

- 100:: Apparatus for air redirection
- 110:: Robot arm
- 111:: Intake and exhaust nozzle
- 112:: Gripper
- 210:: Driving control unit
- 220:: Intake and exhaust pipe unit
- 230:: Branch control unit
- 240:: Air filter
- 250:: Ring blower intake air filter

## Claims

1. An apparatus for air redirection installed to be connected to a gripper of a robot arm gripping and moving waste moving on a conveyor belt using air intake force and an intake and exhaust nozzle, the apparatus comprising:
a driving control unit controlling a gripping operation of the gripper using the air intake force or air exhaust force by driving so that a direction of air is able to be changed to intake or exhaust;
an intake and exhaust pipe unit disposed to be connected between the driving control unit and the intake and exhaust nozzle; and
a branch control unit disposed to be connected between each of pipes of the intake and exhaust pipe unit to supply or block air according to opening and closing control of each of the pipes.

2. The apparatus of claim 1, wherein the driving control unit controls the gripper to grip and move the waste through the air intake force or to release the waste through the air exhaust force.

3. The apparatus of claim 1,
wherein the driving control unit is driven by either a blower method or an air compression method; and
when driven by the blower method, the driving control unit is configured as a ring blower, and when driven by the air compression method, the driving control unit is configured as an air compressor.

4. The apparatus of claim 1, wherein the intake and exhaust pipe unit comprises:
an intake-only pipe that serves as a passage through which air intaken in through an intake port of the gripper flows in through the intake and exhaust nozzle and then is discharged through an exhaust port provided in the driving control unit;
an exhaust-only pipe that serves as a passage through which air intaken in through the exhaust port flows in and then is discharged through the intake port of the gripper via the intake and exhaust nozzle; and
a common intake and exhaust pipe that serves as a passage through which air intaken in or exhausted flows according to valve opening and closing control of the branch control unit.

5. The apparatus of claim 4, wherein the branch control unit comprises:
a first valve having one side connected to the common intake and exhaust pipe and the other side connected to the intake-only pipe;
a second valve having one side connected to the intake-only pipe and the other side connected to an air filter;
a third valve having one side connected to the exhaust-only pipe and the other side connected to the air filter; and
a fourth valve having one side connected to the common intake and exhaust pipe and the other side connected to the exhaust-only pipe.

6. The apparatus of claim 5, wherein the branch control unit controls a directions of all valves provided inside the first to fourth valves horizontally when the direction of air is changed to be intaken by the driving control unit, and controls the direction of all valves provided inside the first to fourth valves vertically when the direction of air is changed to exhaust by the driving control unit.
